(19) Europäisches Patentamt
European Patent Office
Office européen des brevets

(11) **EP 2 859 636 B1**

(12) **FASCICULE DE BREVET EUROPEEN**

(45) Date de publication et mention
de la délivrance du brevet:
**13.04.2016 Bulletin 2016/15**

(21) Numéro de dépôt: **13727618.4**

(22) Date de dépôt: **07.06.2013**

(51) Int Cl.:
*H02H 7/18* *(2006.01)*       *H01M 10/052* *(2010.01)*
*H01M 10/42* *(2006.01)*

(86) Numéro de dépôt international:
**PCT/EP2013/061866**

(87) Numéro de publication internationale:
**WO 2013/186148 (19.12.2013 Gazette 2013/51)**

(54) **BATTERIE D'ACCUMULATEURS PROTEGEE CONTRE LES COURTS-CIRCUITS EXTERNES**

GEGEN EXTERNE KURZSCHLÜSSE GESCHÜTZTE AKKUMULATORENBATTERIE

ACCUMULATOR BATTERY PROTECTED AGAINST EXTERNAL SHORT-CIRCUITS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.06.2012 FR 1255496**

(43) Date de publication de la demande:
**15.04.2015 Bulletin 2015/16**

(73) Titulaire: **Commissariat à l'Énergie Atomique
et aux Énergies Alternatives
75015 Paris (FR)**

(72) Inventeurs:
• **DUPONT, Jeremy**
  **F-38300 Bourgoin-Jallieu (FR)**
• **CARCOUET, Sébastien**
  **F-38450 Vif (FR)**
• **CHATROUX, Daniel**
  **F-38470 Teche (FR)**

(74) Mandataire: **GIE Innovation Competence Group
310, avenue Berthelot
69372 Lyon Cedex 08 (FR)**

(56) Documents cités:
**EP-A1- 1 289 094     US-A- 5 963 019
US-B1- 6 265 846**

**Description**

L'invention concerne les batteries d'accumulateurs électrochimiques. Celles-ci peuvent par exemple être utilisées dans le domaine des transports électriques et hybrides ou les systèmes embarqués.

Les véhicules hybrides combustion/électrique ou électriques incluent notamment des batteries de forte puissance. De telles batteries sont utilisés pour entraîner un moteur électrique à courant alternatif par l'intermédiaire d'un onduleur. Les niveaux de tension nécessaires pour de tels moteurs atteignent plusieurs centaines de Volts, typiquement de l'ordre de 400 Volts. De telles batteries comportent également une forte capacité afin de favoriser l'autonomie du véhicule en mode électrique.

Pour obtenir de fortes puissances et capacités, on place plusieurs groupes d'accumulateurs en série. Pour faciliter la fabrication et la manipulation de la batterie, les accumulateurs sont généralement regroupés dans plusieurs modules connectés en série. Le nombre d'étages dans un module et le nombre d'accumulateurs en parallèle dans chaque étage varient en fonction de la tension, du courant et de la capacité souhaités pour la batterie. Les accumulateurs électrochimiques utilisés pour de tels véhicules sont généralement du type lithium ion pour leur capacité à stocker une énergie importante avec un poids et un volume contenus. Les technologies de batterie de type Lithium ion phosphate de fer LiFeP04 font l'objet d'importants développements du fait d'un niveau de sécurité intrinsèque élevé, au détriment d'une densité de stockage d'énergie un peu en retrait. Un accumulateur électrochimique a habituellement une tension nominale de l'ordre de grandeur suivant :

3.3 V pour une technologie lithium-ion phosphate de Fer, LiFeP04,
4.2 V pour une technologie de type lithium-ion à base d'oxyde de cobalt.

Le document US6265846 décrit un circuit de protection d'une batterie d'accumulateurs électrochimiques pour isoler électriquement un accumulateur défectueux du reste des accumulateurs formant une batterie. Ce document décrit à cet effet la mesure de la tension aux bornes de chacun des accumulateurs de la batterie pour détecter une décharge profonde de l'un de ces accumuleurs. Un tel circuit de protection est inapte à détecter un court-circuit externe aux bornes de la batterie.

Étant données les quantités d'énergie stockées dans des batteries de puissance destinées à la traction de véhicules automobiles, des défaillances de telles batteries peuvent avoir des conséquences considérables.

Un premier type de défaillance potentielle est l'apparition d'un court-circuit interne à un accumulateur. L'accumulateur peut alors être parcouru par des courants très importants fournis par d'autres accumulateurs de la batterie, ce qui peut conduire à son échauffement excessif et à sa destruction. Un tel échauffement ou destruction peut d'une part conduire à un arrêt du véhicule du fait d'une perte d'alimentation du moteur électrique. Un tel échauffement peut également conduire à une défaillance en chaîne des accumulateurs adjacents, qui peuvent à leur tour être détériorés par l'échauffement de l'accumulateur défaillant.

Un deuxième type de défaillance potentielle est l'apparition d'un court-circuit externe aux bornes de la batterie ou d'un de ses modules. Pour limiter les conséquences d'un tel court-circuit, la batterie ou chaque module comporte un fusible connecté en série. Lors d'un tel court-circuit, un ou plusieurs fusibles coupent la connexion série avec l'onduleur, ce qui permet de limiter la quantité d'énergie dissipée dans la batterie ou dans les éléments électriques qui lui sont connectés.

Des circuits de protection ont été proposés pour court-circuiter un éventuel module en défaut, lors de la détection de l'apparition d'un court-circuit par un circuit de commande. De tels circuits de commande permettent notamment d'assurer la continuité de service de la batterie en présence d'un module en défaut.

Cependant, du fait de la faible inductance interne d'une telle batterie, un court-circuit externe aboutit à une très rapide augmentation de l'intensité la traversant. Le temps d'échauffement et d'ouverture des fusibles peut alors s'avérer trop long pour prévenir une détérioration des circuits de protection, ou une détérioration des éléments électriques qui sont connectés à la batterie, voire même une détérioration de la batterie. Les conséquences d'un tel échauffement peuvent alors également aller de la destruction de la batterie à un départ de feu dans le véhicule.

Afin d'accroître la vitesse de détection d'un court-circuit externe, il a été proposé de réaliser une mesure du courant traversant chaque module. Pour éviter la détérioration des circuits de protection de chaque module, chacun de ces modules doit être pourvu de son propre circuit de mesure de courant. Pour déterminer le courant traversant chaque module en un temps réduit, il est notamment connu de lui accoler un capteur à effet Hall, ou de disposer une résistance Shunt en série avec ce module. Lorsque le courant mesuré traversant un module dépasse un seuil, la batterie est déconnectée de l'onduleur. De telles mesures de courant induisent une très grande complexité de câblage, un surcoût tout à fait considérable pour la batterie, et des pertes thermiques importantes pour les cas de la résistance shunt.

L'invention vise à résoudre un ou plusieurs de ces inconvénients. L'invention porte ainsi sur une batterie de puissance, telle que définie dans les revendications annexées.

D'autres caractéristiques et avantages de l'invention ressortiront clairement de la description qui en est faite ci-après, à titre indicatif et nullement limitatif, en référence aux dessins annexés, dans lesquels :

- la figure 1 est une représentation schématique de véhicule muni d'une alimentation par batterie électrochimique selon l'invention ;

- la figure 2 est une représentation schématique d'un exemple de module muni d'un circuit d'isolation dont l'invention permet d'éviter la destruction ;
- la figure 3 est un schéma électrique d'une première variante de dispositif de détection de court-circuit connecté aux bornes d'un module ;
- la figure 4 est un diagramme illustrant le fonctionnement du dispositif de détection dans différentes configurations de charge d'une batterie ;
- la figure 5 est un schéma électrique d'une deuxième variante de dispositif de détection de court-circuit connecté aux bornes d'un module ;
- la figure 6 est un schéma électrique d'une troisième variante de dispositif de détection de court-circuit connecté aux bornes d'un module.

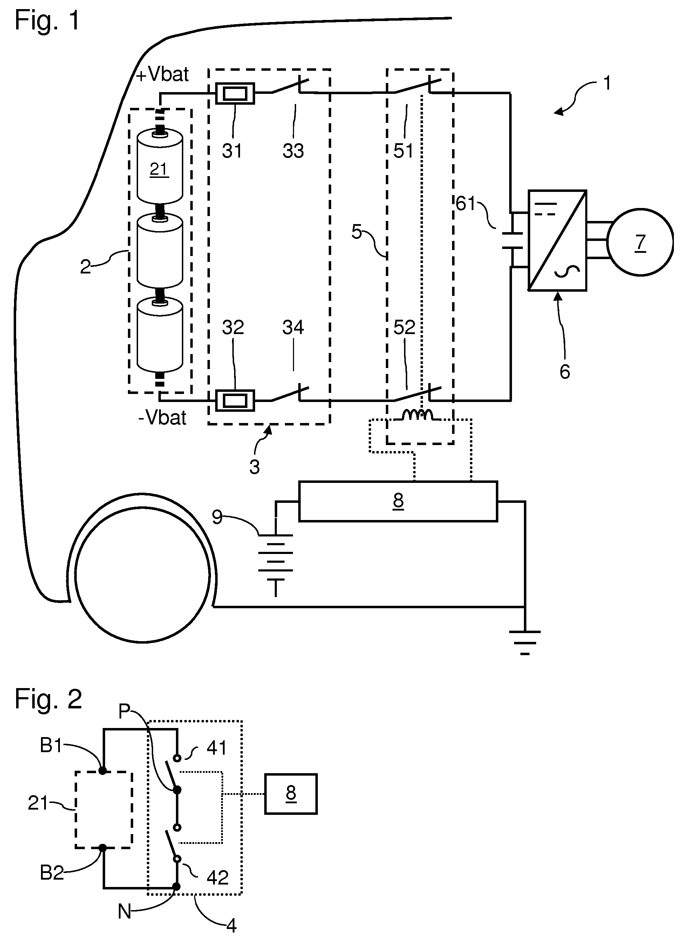

La figure 1 illustre un exemple de véhicule 1 mettant en oeuvre un mode de réalisation de l'invention. Le véhicule 1 est un véhicule électrique comprenant de façon connue en soi une batterie de puissance 2 incluant des modules 21 contenant des accumulateurs électrochimiques connectés en série, par exemple du type lithium-ion phosphate de Fer (LiFePO4). La batterie 2 est avantageusement conformée sous forme de modules connectés en série pour faciliter son assemblage et sa supervision. Une batterie de puissance dont la tension nominale est généralement supérieure à 100V comprendra typiquement plusieurs modules 21 connectés en série. Chaque module 21 peut comprendre une pluralité d'étages d'accumulateurs connectés en série, chaque étage incluant plusieurs accumulateurs connectés en parallèle. Un module 21 peut comprendre un grand nombre d'accumulateurs connectés en série en fonction de la tension nécessaire et du type d'accumulateurs utilisé.

La tension aux bornes de la batterie 2 chargée est typiquement de l'ordre de 400 V. La batterie 2 applique une tension +Vbat sur une première borne, et une tension -Vbat sur une deuxième borne. Les modules 21 sont connectés en série par l'intermédiaire de connexions électriques de puissance. Les bornes de la batterie 2 sont connectées à une interface continu d'un onduleur 6. Un moteur électrique 7 est connecté sur une interface alternatif de l'onduleur 6.

La connexion entre les bornes de la batterie 2 et l'interface continu de l'onduleur 6 est réalisée par l'intermédiaire d'un bus haute tension muni d'un circuit de protection 3 et par l'intermédiaire d'un circuit d'accouplement de puissance 5. Le circuit de protection 3 peut comprendre de façon connue en soi des fusibles 31 et 32 configurés pour ouvrir la connexion lors d'un court-circuit. Le circuit de protection 3 comprend en outre des sectionneurs 33 et 34 permettant de déconnecter la batterie 2 pour la mettre en sécurité de manière sûre et contrôlable visuellement pour les interventions sur le véhicule 1.

Le circuit d'accouplement de puissance 5 comprend des interrupteurs 51 et 52 permettant de connecter/déconnecter sélectivement les bornes de la batterie 2 à l'interface continu de l'onduleur 6. L'ouverture/fermeture des interrupteurs 51 et 52 est commandée par un circuit de commande 8, typiquement un calculateur de supervision du fonctionnement de la batterie 2. Le circuit de commande 8 ferme les interrupteurs 51 et 52 seulement lorsque le véhicule est apte à démarrer. Les interrupteurs 51 et 52 peuvent être utilisés pour interrompre l'alimentation du moteur 7 en cas de défauts.

Le circuit de commande 8 est typiquement alimenté par l'intermédiaire d'une batterie 9 d'alimentation du réseau de bord du véhicule 1, présentant un niveau de tension très inférieur à celui de la batterie 2. Le circuit de commande 8 est typiquement connecté à la masse mécanique, incluant le châssis et la carrosserie métalliques du véhicule 1.

L'onduleur 6 inclut typiquement 6 transistors de type IGBT constituant trois bras de commutation et le moteur 7 est avantageusement directement alimenté par cet onduleur 6. Un condensateur de découplage 61 de quelques centaines de microFarad est placé en parallèle avec l'onduleur 6. Ce condensateur 61 sert au découplage de la tension afin de minimiser les fluctuations de la tension d'alimentation causées par la commutation rapide des IGBTs à la fermeture ou à l'ouverture.

La figure 2 est un schéma électrique d'un module 21 muni d'un circuit d'isolation 4. L'invention s'applique de façon particulièrement avantageuse sur un module 21 muni d'un tel circuit d'isolation 4. Dans le cas où une défaillance est détectée par le circuit de commande 8, le circuit d'isolation 4 pourra avantageusement commander l'isolation de ce module 21 afin d'assurer la protection de la batterie 2 ou la continuité de service du reste de la batterie 2. Cependant, comme détaillé par la suite, le module 21 peut de façon avantageuse comporter un circuit de commande dédié, destiné à détecter un court-circuit externe au module et à protéger le module 21 et son circuit d'isolation 4 contre ce court circuit.

Le module 21 comporte des bornes B1 et B2 entre lesquelles il applique sa différence de potentiel d'alimentation. Le circuit d'isolation 4 comporte deux pôles de sortie de puissance P et N, destinés à être connectés à des modules en série ou à une des bornes de puissance de la batterie 2.

Le circuit d'isolation 4 comprend en outre deux interrupteurs 41 et 42 dont l'ouverture/fermeture est commandée par le circuit de commande 24 ou par le circuit de commande 8. Le circuit d'isolation 4 comporte deux branches connectées en parallèle entre les pôles P et N. Une première branche de puissance inclut l'interrupteur 41 en série avec le module 21. Une deuxième branche de dérivation inclut l'interrupteur 42.

L'interrupteur 42 est configuré pour être normalement fermé, l'interrupteur 41 étant configuré pour être normalement ouvert. L'interrupteur 41 est configuré pour ouvrir/fermer sélectivement la branche incluant le module 21. L'interrupteur 42 est configuré pour ouvrir/fermer sélectivement la branche de dérivation. La fermeture de l'interrupteur 41 est commandée par le circuit 8 ou le circuit 24. En l'absence de signal de commande appliqué par le circuit 8 ou le circuit 24, l'interrupteur 41 est maintenu ouvert afin d'isoler automatiquement le module 21 en cas de dysfonctionnement. La fermeture de l'interrupteur 42 est commandée par défaut par la tension entre les bornes B1 et B2. Ainsi, la présence normale d'une tension entre les bornes B1 et B2 maintient l'interrupteur 42 fermé en l'absence d'autres commandes, ce qui assure le court-circuitage du module 21 par défaut en cas de dysfonctionnement. L'ouverture de l'interrupteur 42 doit être commandée de façon active par le circuit 8 ou le circuit 24 afin d'appliquer la tension du module 21 entre les pôles P et N.

Les interrupteurs 41 et 42 peuvent être des transistors de type MOSFET, qui peuvent aisément être dimensionnés de façon appropriée à un coût relativement réduit. Les transistors 41 et 42 peuvent être de type nMOS.

Lors de l'apparition d'un court-circuit externe aux bornes de la batterie ou d'un des modules, il est nécessaire de limiter les conséquences d'un tel court-circuit. Le circuit de commande 24 selon l'invention permet ainsi de protéger les modules 21 lors d'un tel court-circuit. De plus, en présence d'un circuit de protection 4 muni d'interrupteurs 41 et 42 de type MOSFET, le circuit de commande 24 assure la protection de ce circuit 4 en interrompant la conduction avant que les interrupteurs 41 et 42 ne soient endommagés par un échauffement excessif. On évite ainsi que les interrupteurs 41 et 42 ne soient détruits vers un fonctionnement en court-circuit, ce qui aggraverait les conséquences du court-circuit initial.

L'invention propose d'analyser la tension entre les bornes de sortie d'une batterie ou d'un module, de comparer cette tension à un seuil représentatif d'un court-circuit, pour générer un signal d'ouverture d'un interrupteur d'isolation lorsque cette tension devient inférieure à ce seuil.

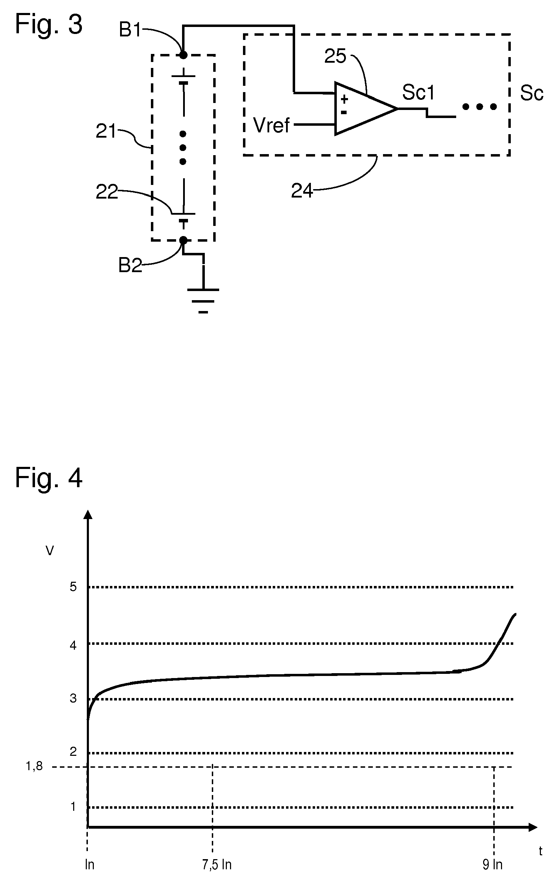

La figure 3 est un schéma électrique d'une première variante d'un dispositif de détection de court-circuit inclus dans un circuit de commande 24 dédié au module 21. Le circuit de commande 24 est dédié à la batterie 2. Le circuit 24 est destiné à détecter un court-circuit externe au module 21 et à protéger ce module 21 et son circuit d'isolation 4 contre ce court-circuit. Ce dispositif de détection de court-circuit comprend un comparateur de tension 25. L'entrée non inverseuse du comparateur 25 est connectée à la borne B1 (positive) du module 21, ce module 21 incluant plusieurs accumulateurs électrochimiques 22 connectés en série. L'entrée du comparateur 25 est connectée à une tension de référence Vref. Pour discriminer un court-circuit externe par rapport à une décharge excessive du module 21, la tension de référence Vref est inférieure à la valeur inférieure de la plage de tension nominale de ce module 21.

La figure 4 est un diagramme illustrant notamment la tension dans le temps aux bornes d'un accumulateur 22 de type LiFePO4 lors de sa charge ou sa décharge à un courant nominal. La plage de tension en fonctionnement nominal d'un tel accumulateur 22 est usuellement comprise entre 2V et 3,6 V, bien que la plupart des modes de fonctionnement restreignent leur utilisation dans une plage comprise entre 3,3V et 3,6V. Vref est ainsi fixée inférieure à N * 2, avec N le nombre d'accumulateurs 22 connectés en série dans le module 21. La plage de tension en fonctionnement nominal est la plage de tension dans laquelle un accumulateur peut être maintenu sans qu'il subisse de détérioration. En désignant par Vmin la valeur inférieure d'une telle plage de fonctionnement, Vref devra être inférieure à N * Vmin. Avantageusement, Vref sera inférieure ou égale à une tension de N * Vinf, avec Vinf = Vmin - 0,2V.

En considérant que la tension aux bornes des accumulateurs doit rester supérieure à 2 V, la tension Vref sera fixée à une valeur inférieure à N * 2. La tension aux bornes d'un tel accumulateur chutant par exemple de 200 mV (cette chute est relativement élevée pour une batterie de puissance comportant des impédances internes non négligeables) pour une intensité nominale In, la tension Vref pourra être fixée à une valeur égale à

$$Vref = N * (2 - 0,2) = N * 1,8.$$

Pour permettre une détection rapide d'un court-circuit, la tension Vref sera également avantageusement fixée à une valeur supérieure ou égale à une tension de N * Vbas, avec Vbas = Vmin - 0,4V. Ainsi, un court-circuit sera détecté très tôt sans avoir à attendre une décharge importante des accumulateurs.

Lorsque la tension appliquée sur la borne non inverseuse du comparateur 25 devient inférieure à la tension Vref, un signal d'alerte Sc1 est généré à la sortie du comparateur 25. Le circuit de commande 24 peut alors déterminer que les conditions d'identification d'un court-circuit externe sont remplies et peut générer un signal de commande Sc d'ouverture d'un interrupteur permettant d'isoler les bornes du module 21 d'une charge électrique. Le signal de commande Sc peut notamment être utilisé pour ouvrir l'interrupteur 41 et fermer l'interrupteur 42 du circuit d'isolation 4. Ainsi, le circuit de commande 24 permet de réaliser une détection peu coûteuse d'un court-circuit externe, cette détection étant suffisamment rapide pour couper le courant avant la détérioration du module 21 ou de son circuit d'isolation 4.

Comme illustré à la figure 4, un accumulateur de type LiFePO4 22 atteint la tension de 1,8 V pour un courant de décharge de :

In si sa tension à vide est de 2 V ;
7,5 * In si sa tension à vide est de 3,3V ;
9 * In si sa tension à vide est de 3,6 V.

Par conséquent, un circuit de commande 24 tel que décrit en référence à la figure 3 réalise une coupure du courant à des valeurs de courants très disparates en fonction de la charge du module 21. Le temps avant coupure peut donc s'avérer relativement disparate en fonction de la charge du module 21.

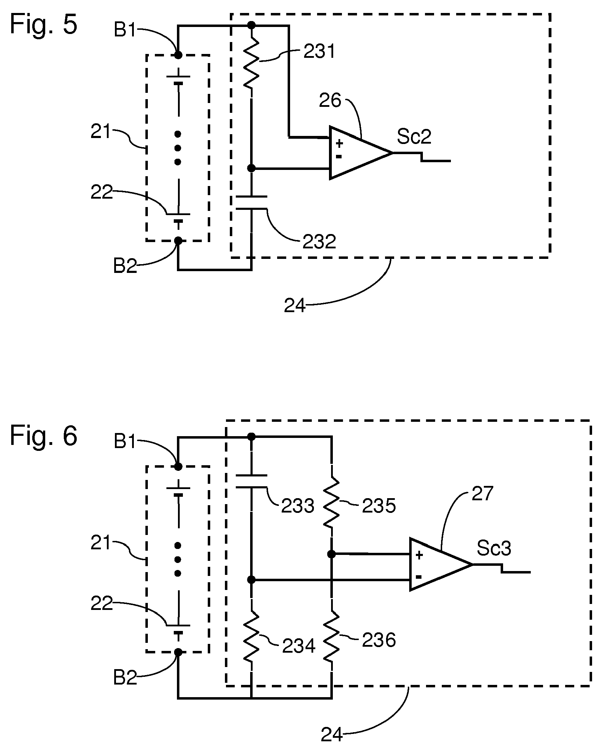

La figure 5 est un schéma électrique d'une deuxième variante d'un dispositif de détection de court-circuit pouvant être inclus dans le circuit de commande 24. Un tel dispositif de détection de court-circuit peut être inclus dans le circuit de commande 24 en remplacement ou en complément du comparateur 25.

Ce dispositif de détection de court-circuit comprend un comparateur de tension 26. L'entrée non inverseuse du comparateur 26 est connectée à la borne B1 du module 21. Un circuit RC série est connecté entre les bornes B1 et B2 du module 21. Une résistance 231 du circuit RC est connectée entre l'entrée non inverseuse (par l'intermédiaire d'une fonction de seuil 237) et l'entrée inverseuse du comparateur 26. Une capacité 232 est connectée entre l'entrée inverseuse du comparateur 26 (par l'intermédiaire de la fonction de seuil 237) et la borne B2 (borne négative).

La capacité 232 a pour fonction de mémoriser une tension aux bornes du module 21. À cet effet, le circuit RC comporte une constante de temps suffisamment élevée pour que la tension aux bornes de la capacité 232 reste sensiblement constante lors d'une variation brutale de la tension aux bornes du module 21 en présence d'un court-circuit externe. Cette constante de temps sera par exemple typiquement supérieure à 1 seconde. Comme la charge de la capacité 232 varie peu durant un fonctionnement normal du module 21, le circuit RC consomme un courant négligeable. Pour limiter ce courant, la résistance 231 sera cependant avantageusement au moins égale à 100 kΩ, et de préférence supérieure à 1 MΩ.

Ainsi, le comparateur 26 génère un signal d'alerte Sc2 seulement lorsque la tension mémorisée dans la capacité 232 est supérieure à la somme de la tension aux bornes du module 21 et du seuil de la fonction seuil 237, ce qui est un indicateur d'une rapide baisse de la tension aux bornes du module 21. Le circuit de commande 24 peut alors déterminer que les conditions d'identification d'un court-circuit externe sont remplies et peut générer le signal de commande Sc d'ouverture d'un interrupteur permettant d'isoler les bornes du module 21 d'une charge électrique. Ainsi, un tel circuit de commande 24 permet de réaliser une détection peu coûteuse d'un court-circuit externe, cette détection étant suffisamment rapide pour couper le courant avant la détérioration du module 21 ou de son circuit d'isolation 4. Un tel circuit de commande 24 est alors insensible au niveau de charge du module 21 puisque sa référence de tension pour comparaison à la tension du module 21 est en fait la tension aux bornes du module 21 avant le court-circuit. Le temps avant coupure est alors indépendant de la charge du module 21. Les conditions de coupure des comparateurs 25 et 26 peuvent être cumulées pour éviter une détection intempestive d'un court-circuit.

La figure 6 est un schéma électrique d'une troisième variante d'un dispositif de détection de court-circuit pouvant être inclus dans le circuit de commande 24. Un tel dispositif de détection de court-circuit peut être inclus dans le circuit de commande 24 en complément du comparateur 25 ou du comparateur 26.

Ce dispositif de détection de court-circuit comprend un comparateur de tension 27. L'entrée non inverseuse du comparateur 27 est connectée à une fonction de seuil négatif 235. Un circuit RC série est connecté entre les bornes B1 et B2 du module 21. Une résistance 234 du circuit RC est connectée entre l'entrée inverseuse du comparateur 27 et la borne B2 du module 21. Une capacité 233 est connectée entre l'entrée inverseuse du comparateur 27 et la borne B1. Le circuit RC permet de détecter un front de tension trop rapide aux bornes du module 21.

La constante de temps est ici suffisamment faible (par exemple inférieure à 10μs) pour ne détecter que des fronts de tension rapides, correspondant potentiellement à des courts-circuits.

Ainsi, le comparateur 27 génère un signal d'alerte Sc3 seulement lorsque la tension aux bornes du module 21 baisse selon un front trop rapide. Le circuit de commande 24 peut alors déterminer que les conditions d'identification d'un court-circuit externe sont remplies et peut générer le signal de commande Sc d'ouverture d'un interrupteur permettant d'isoler les bornes du module 21 d'une charge électrique. Ainsi, un tel circuit de commande 24 permet de réaliser une détection peu coûteuse d'un court-circuit externe, cette détection étant suffisamment rapide pour couper le courant avant la détérioration du module 21 ou de son circuit d'isolation 4. Un tel circuit de commande 24 est alors insensible au niveau de charge du module 21 puisqu'il détecte une vitesse de décharge. Le temps avant coupure est alors indépendant de la charge du module 21. Les conditions de coupure des comparateurs 25 et 27 ou des comparateurs 26 et 27 peuvent être cumulées pour éviter une détection intempestive d'un court-circuit.

Bien que le circuit de détection décrit dans les modes de réalisation est basé sur l'application sur le circuit de détection de la tension aux bornes d'un module, l'invention s'applique également à une batterie incluant plusieurs modules en série et appliquant la tension à ses bornes sur le circuit de détection. Par principe, chacun des modules incluant des accumulateurs en série est assimilable à une batterie d'accumulateurs.

**Revendications**

1.  Batterie de puissance (21), comprenant :

    - des accumulateurs électrochimiques connectés en série entre deux bornes de sortie (B1, B2) de la batterie, **caractérisée en ce qu'**elle comprend:

- un interrupteur (41) permettant sélectivement d'isoler une des bornes de sortie d'une charge électrique ;
- un circuit (24) de détection d'un court-circuit externe, sur lequel la tension entre les bornes de sortie de la batterie est appliquée, le circuit de détection étant configuré pour :

- comparer la tension appliquée à un seuil de tension représentatif d'un court-circuit ;
- générer un signal d'ouverture dudit interrupteur (41) lorsque la tension appliquée devient inférieure audit seuil.

2. Batterie de puissance (2, 21) selon la revendication 1, dans laquelle le circuit (24) de détection compare la tension appliquée à un seuil de tension présentant une valeur prédéterminée inférieure ou égale à N * Vmin, avec N le nombre d'accumulateurs électrochimiques connectés en série entre les bornes de sortie et Vmin la valeur inférieure de la plage de tension en fonctionnement nominal de chacun desdits accumulateurs.

3. Batterie de puissance selon la revendication 2, dans laquelle le circuit (24) de détection compare la tension appliquée à un seuil de tension présentant une valeur prédéterminée inférieure ou égale à N * Vinf, avec Vinf = Vmin - 0,2V.

4. Batterie de puissance selon la revendication 1, dans laquelle le circuit de détection (24) est configuré pour mémoriser une valeur de tension entre les bornes de sortie de la batterie, et configuré pour utiliser ultérieurement la valeur de tension mémorisée comme seuil de tension représentatif d'un court-circuit.

5. Batterie de puissance selon la revendication 4, dans laquelle le circuit de détection (24) comprend un circuit RC série (231, 232) présentant une constante de temps au moins égale à une seconde et connecté entre les bornes de la batterie, la résistance (231) dudit circuit RC présentant une première électrode connectée à la borne positive de la batterie (B1) et à l'entrée non inverseuse d'un comparateur (26) et une deuxième électrode connectée à l'entrée inverseuse du comparateur, la capacité (232) dudit circuit RC présentant une première électrode connectée à la borne négative de la batterie (B2) et une deuxième électrode connectée à l'entrée inverseuse du comparateur, le circuit de détection étant configuré pour générer un signal d'ouverture dudit interrupteur lorsque la tension sur l'entrée non inverseuse est inférieure à la tension sur l'entrée inverseuse.

6. Batterie de puissance selon l'une quelconque des revendications précédentes, dans lequel le circuit de détection (24) comprend en outre :

- un diviseur de tension (235, 236) connecté entre les bornes (B1, B2) de la batterie ;
- un comparateur (27) dont l'entrée non inverseuse est connectée à un point intermédiaire du diviseur de tension ;
- un circuit RC série (233, 234) dont la capacité (233) est connectée entre la borne positive de la batterie et l'entrée inverseuse du comparateur (27) et dont la résistance est connectée entre la borne négative de la batterie et l'entrée inverseuse du comparateur (27).

7. Batterie de puissance selon l'une quelconque des revendications précédentes, comprenant au moins huit accumulateurs (22) connectés en série de type lithium-ion LiFeP04.

8. Batterie de puissance selon l'une quelconque des revendications précédentes, comprenant un circuit d'isolation (4) comprenant :

- des premier et deuxième pôles de sortie de puissance (P, N) ;
- des premier et deuxième interrupteurs (41, 42), le premier interrupteur étant un interrupteur normalement ouvert (41), le deuxième interrupteur étant un interrupteur normalement fermé (42), une tension d'alimentation de ladite batterie étant appliquée comme signal de commande de fermeture par défaut du deuxième interrupteur (42);
- des première et deuxième branches connectées en parallèle entre les premier et deuxième pôles de sortie de puissance (P, N), la première branche incluant l'interrupteur normalement ouvert (41) et les accumulateurs connectés en série, la deuxième branche étant sélectivement ouverte/fermée par l'interrupteur normalement fermé (42).

9. Batterie de puissance selon la revendication 8, dans laquelle lesdits premier et deuxième interrupteurs (41, 42) du circuit d'isolation (4) sont de type MOS.

10. Batterie de puissance selon la revendication 8, dans laquelle ledit premier interrupteur (41) du circuit d'isolation (4) est de type MOS et ledit deuxième interrupteur (42) du circuit d'isolation (4) est de type JFET.

11. Batterie de puissance selon la revendication 8 ou 9 ou 10, dans laquelle ledit signal d'ouverture généré par le circuit de détection (24) est appliqué sur une électrode de commande de l'interrupteur normalement ouvert (41) pour forcer son ouverture.

**Patentansprüche**

1. Leistungsbatterie (21), welche aufweist:

   - elektrochemische Akkumulatoren, die zwischen zwei Ausgangsklemmen (B1, B2) der Batterie in Reihe geschaltet sind, **dadurch gekennzeichnet, dass** sie aufweist:
   - einen Schalter (41), der es ermöglicht, selektiv eine der Ausgangsklemmen von einer elektrischen Last zu trennen;
   - eine Schaltung (24) zur Erkennung eines externen Kurzschlusses, an welche die Spannung zwischen den Ausgangsklemmen der Batterie angelegt wird, wobei die Erkennungsschaltung dafür ausgelegt ist:
   - die angelegte Spannung mit einem Spannungsschwellenwert zu vergleichen, der für einen Kurzschluss repräsentativ ist;
   - ein Signal zur Öffnung des Schalters (41) zu erzeugen, wenn die angelegte Spannung kleiner als der Schwellenwert wird.

2. Leistungsbatterie (2, 21) nach Anspruch 1, wobei die Erkennungsschaltung (24) die angelegte Spannung mit einem Spannungsschwellenwert vergleicht, der einen vorgegebenen Wert aufweist, der kleiner oder gleich $N * Vmin$ ist, wobei N die Anzahl der elektrochemischen Akkumulatoren ist, die zwischen den Ausgangsklemmen in Reihe geschaltet sind, und Vmin der untere Grenzwert des Spannungsbereichs im Nennbetrieb jedes der Akkumulatoren ist.

3. Leistungsbatterie nach Anspruch 2, wobei die Erkennungsschaltung (24) die angelegte Spannung mit einem Spannungsschwellenwert vergleicht, der einen vorgegebenen Wert aufweist, der kleiner oder gleich $N * Vinf$ ist, mit $Vinf = Vmin -0,2 V$.

4. Leistungsbatterie nach Anspruch 1, wobei die Erkennungsschaltung (24) dafür ausgelegt ist, einen Wert der Spannung zwischen den Ausgangsklemmen der Batterie zu speichern, und dafür ausgelegt ist, später den gespeicherten Spannungswert als Spannungsschwellenwert zu verwenden, der für einen Kurzschluss repräsentativ ist.

5. Leistungsbatterie nach Anspruch 4, wobei die Erkennungsschaltung (24) eine RC-Reihenschaltung (231, 232) aufweist, die eine Zeitkonstante aufweist, die wenigstens gleich einer Sekunde ist, und zwischen die Klemmen der Batterie geschaltet ist, wobei der Widerstand (231) dieser RC-Schaltung eine erste Elektrode aufweist, die mit der positiven Klemme der Batterie (B1) und mit dem nicht-invertierenden Eingang eines Komparators (26) verbunden ist, und eine zweite Elektrode, die mit dem invertierenden Eingang des Komparators verbunden ist, wobei die Kapazität (232) der RC-Schaltung eine erste Elektrode aufweist, die mit der negativen Klemme der Batterie (B2) verbunden ist, und eine zweite Elektrode, die mit dem invertierenden Eingang des Komparators verbunden ist, wobei die Erkennungsschaltung dafür ausgelegt ist, ein Signal zur Öffnung des Schalters zu erzeugen, wenn die Spannung am nicht-invertierenden Eingang kleiner als die Spannung am invertierenden Eingang ist.

6. Leistungsbatterie nach einem der vorhergehenden Ansprüche, wobei die Erkennungsschaltung (24) außerdem aufweist:

   - einen Spannungsteiler (235, 236), der zwischen die Klemmen (B1, B2) der Batterie geschaltet ist;
   - einen Komparator (27), dessen nicht-invertierender Eingang mit einem Zwischenpunkt des Spannungsteilers verbunden ist;
   - eine RC-Reihenschaltung (233, 234), deren Kapazität (233) zwischen die positive Klemme der Batterie und den invertierenden Eingang des Komparators (27) geschaltet ist und deren Widerstand zwischen die negative Klemme der Batterie und den invertierenden Eingang des Komparators (27) geschaltet ist.

7. Leistungsbatterie nach einem der vorhergehenden Ansprüche, welche wenigstens acht in Reihe geschaltete Akkumulatoren (22) vom Typ $LiFePO_4$-Lithium-Ionen-Akkumulatoren aufweist.

8. Leistungsbatterie nach einem der vorhergehenden Ansprüche, welche eine Isolationsschaltung (4) aufweist, die aufweist:

   - einen ersten und einen zweiten Leistungs-Ausgangspol (P, N);
   - einen ersten und einen zweiten Schalter (41, 42), wobei der erste Schalter ein normaler Weise geöffneten Typ (41) ist, wobei der zweite Schalter ein normaler Weise geschlossenen Typ (42) ist, wobei eine Versorgungsspannung der Batterie als standardmäßiges Schließsteuersignal des zweiten Schalters (42) angelegt wird;
   - einen ersten und einen zweiten Zweig, die zwischen dem ersten und dem zweiten Leistungs-Ausgangspol (P, N) parallelgeschaltet sind, wobei der erste Zweig den Schalter der normaler Weise geöffneten Typ (41) und die in Reihe geschalteten Akkumulatoren aufweist, wobei der zweite Zweig den Schalter der normaler Weise geschlossenen Typ durch den (42) selektiv geöffnet/geschlossen wird.

9. Leistungsbatterie nach Anspruch 8, wobei der erste und der zweite Schalter (41, 42) der Isolationsschaltung (4) vom Typ MOS sind.

10. Leistungsbatterie nach Anspruch 8, wobei der erste Schalter (41) der Isolationsschaltung (4) vom Typ MOS ist und der zweite Schalter (42) der Isolationsschaltung (4) vom Typ JFET ist.

11. Leistungsbatterie nach Anspruch 8 oder 9 oder 10, wobei das von der Erkennungsschaltung (24) erzeugte Öffnungssignal an eine Steuerelektrode des Schließers (41) angelegt wird, um sein Öffnen zu erzwingen.


**Claims**

1. Power battery (21), comprising:

   - electrochemical accumulators connected in series between two output terminals (B1, B2) of the battery; **characterized in that** the battery comprises:
   - a switch (41) allowing one of the output terminals to be selectively isolated from an electrical load;
   - a detection circuit (24) for detecting an external short-circuit, to which the voltage between the output terminals of the battery is applied, the detection circuit being configured to:

     - compare the applied voltage to a voltage threshold representative of a short-circuit;
     - generate a signal for opening said switch (41) when the applied voltage drops below said threshold.

2. Power battery (2, 21) according to Claim 1, in which the detection circuit (24) compares the applied voltage to a voltage threshold having a preset value lower than or equal to N * Vmin, where N is the number of electrochemical accumulators connected in series between the output terminals and Vmin is the lower limit of the voltage range in nominal operation of each of said accumulators.

3. Power battery according to Claim 2, in which the detection circuit (24) compares the applied voltage to a voltage threshold having a preset value lower than or equal to N * Vinf, where Vinf = Vmin - 0.2 V.

4. Power battery according to Claim 1, in which the detection circuit (24) is configured to memorize a voltage value across the output terminals of the battery, and configured to use subsequently the memorized voltage value as the voltage threshold representative of a short-circuit.

5. Power battery according to Claim 4, in which the detection circuit (24) comprises a series RC circuit (231, 232) having a time constant at least equal to one second and connected between the terminals of the battery, the resistor (231) of said RC circuit having a first electrode connected to the positive terminal of the battery (B1) and to the non-inverting input of a comparator (26) and a second electrode connected to the inverting input of the comparator, the capacitor (232) of said RC circuit having a first electrode connected to the negative terminal of the battery (B2) and a second electrode connected to the inverting input of the comparator, the detection circuit being configured in order to generate a signal for opening said switch when the voltage on the non-inverting input is lower than the voltage on the inverting input.

6. Power battery according to any one of the preceding claims, in which the detection circuit (24) furthermore comprises:

   - a voltage divider (235, 236) connected between the terminals (B1, B2) of the battery;
   - a comparator (27) the non-inverting input of which is connected to an intermediate point of the voltage divider;
   - a series RC circuit (233, 234) the capacitor (233) of which is connected between the positive terminal of the battery and the inverting input of the comparator (27) and the resistor of which is connected between the negative terminal of the battery and the inverting input of the comparator (27).

7. Power battery according to any one of preceding claims, comprising at least eight $LiFePO_4$ lithium-ion accumulators (22) connected in series.

8. Power battery according to any one of the preceding claims, comprising an isolating circuit (4) comprising:

   - first and second power output poles (P, N);
   - first and second switches (41, 42), the first switch being a normally open switch (41) and the second switch being a normally closed switch (42), a supply voltage of said battery being applied by way of closing control signal by default to the second switch (42);
   - first and second branches connected in parallel between the first and second power output poles (P, N), the first branch including the normally open switch (41) and the series-connected accumulators, the second branch being selectively open/closed by the normally closed switch (42).

9. Power battery according to Claim 8, in which said first and second switches (41, 42) of the isolating circuit (4) are MOS transistors.

10. Power battery according to Claim 8, in which said first switch (41) of the isolating circuit (4) is a MOS transistor and said second switch (42) of the isolating circuit (4) is a JFET.

11. Power battery according to Claim 8 or 9 or 10, in which said opening signal generated by the detection circuit (24) is applied to a control electrode of the normally open switch (41) in order to force it to open.

Fig. 1

Fig. 2

Fig. 3

B1

21

22

B2

25

Sc1 • • • Sc

Vref

24

Fig. 4

V

5

4

3

2

1,8

1

ln          7,5 ln                                              9 ln        t

Fig. 5

Fig. 6

## EP 2 859 636 B1

RÉFÉRENCES CITÉES DANS LA DESCRIPTION

**Documents brevets cités dans la description**

- US 6265846 B